# FASCICULE DE BREVET EUROPEEN

(11) **EP 0 933 830 B1**
(45) Date de publication et mention de la délivrance du brevet: **14.04.2004**
(21) Numéro de dépôt: 98403297.9
(22) Date de dépôt: 24.12.1998
(51) Int. Cl.: H01M 10/50, H01M 2/02

(54) **Batterie monobloc étanche munie d'un dispositif de refroidissement**
Verschlossene monoblock Batterie mit Kühlungsvorrichtung
Sealed monoblock battery having a cooling device

(30) Priorité: 29.01.1998 FR 9800969
(43) Date de publication de la demande: 04.08.1999
(73) Titulaire: ALCATEL, 75008 Paris (FR)
(72) Inventeur: Verhoog, Roelof, 33200 Bordeaux (FR); Barbotin, Jean-Loup, 33370 Pompignac (FR)
(74) Mandataire: Korakis-Ménager, Sophie

(56) Documents cités:
- EP-A- 0 596 778
- DE-U- 9 210 384
- FR-A- 2 742 002

## Description

La présente invention concerne un batterie d'accumulateurs monobloc étanche munie d'un dispositif de refroidissement par un fluide en circulation.

Une batterie d'accumulateurs de type monobloc possède un conteneur unique, généralement en matière plastique et de forme prismatique, constitué d'un bac et d'un couvercle. Le bac comporte des alvéoles, séparées par des cloisons, dans lesquelles sont placés les éléments d'accumulateur. Chaque élément est un faisceau électrochimique constitué par l'assemblage alternatif d'électrodes positives et négatives, séparées les unes des autres par un séparateur, baignant dans un électrolyte. Ces batteries ont des capacités comprises entre 5Ah et 250Ah, et une énergie massique au moins égale à 55Wh/Kg. Elles sont utilisées en particulier pour l'alimentation des véhicules électriques.

On sait que les différents états d'utilisation d'une batterie d'accumulateurs (charge, surcharge, décharge) conduisent à des élévations de la température qui modifient ses performances. Une batterie monobloc munie d'un dispositif de refroidissement par un fluide en circulation est décrite dans la demande de brevet européen EP-0 596 778. Le dispositif de refroidissement comporte deux flasques soudés de manière étanche respectivement à deux parois opposées du bac en matière plastique. Chacun des flasques définit avec la paroi correspondante un compartiment de circulation présentant à sa partie supérieure un orifice d'entrée et un orifice de sortie pour le fluide situés dans le couvercle de la batterie. Une pluralité de nervures verticales forment dans ledit compartiment des chicanes pour la circulation du fluide. Pour que l'évacuation de la chaleur s'effectue efficacement, les parois du bac portant les flasques sont minces (2mm).

La pression maximale de fonctionnement de la batterie monobloc est fixée par la pression d'ouverture d'une soupape. Lorsque la pression maximale est au plus égale à 1 bar relatif (différence de pression par rapport à la pression atmosphérique), l'ouverture de la soupape se produit périodiquement. Les gaz s'échappent, entraînant ainsi une consommation de l'eau de l'électrolyte. La batterie exige donc une maintenance régulière, c'est-à-dire qu'il convient de rajouter de l'eau fréquemment. Cette batterie est dite "ouverte". Pour éviter les remises à niveau d'électrolyte consécutives aux périodes de fonctionnement, on a mis au point des batteries dites "étanches" qui fonctionnent à une pression relative qui est supérieure à 1 bar relatif.

Le dispositif de refroidissement décrit dans le brevet français n°2 697 678 se révèle inutilisable dans le cas d'une batterie monobloc étanche car la faible épaisseur des parois rend le conteneur incapable de résister à une pression interne dépassant 1 bar relatif. Une première solution est d'augmenter l'épaisseur des parois latérales pour en accroître la résistance, mais le refroidissement ne s'effectue plus avec l'efficacité nécessaire, entraînant une baisse des performances et un raccourcissement de la durée de vie. Une autre solution à épaisseur de paroi égale, on peut diminuer la largeur des alvéoles afin de rapprocher les cloisons séparatrices. Les faisceaux électrochimiques qui y sont alors placés comportent moins d'électrodes, et par conséquent la batterie possède une capacité plus faible.

Par ailleurs les autres dispositifs de refroidissement connus augmentent l'encombrement de la batterie.

La présente invention a pour but de proposer une batterie monobloc étanche munie d'un dispositif de refroidissement efficace et peu encombrant, une épaisseur de la paroi du bac au plus égale à 2,5mm favorisant l'efficacité du refroidissement.

L'objet de la présente invention est une batterie monobloc étanche comprenant un conteneur en matière plastique constitué d'un couvercle et d'un bac divisé en alvéoles par au moins une cloison, ladite batterie étant munie d'un dispositif de refroidissement comportant deux flasques en matière plastique coopérant respectivement avec la face externe de deux parois opposées dudit bac perpendiculaires à ladite cloison, ledit flasque définissant avec ladite paroi un compartiment comportant une pluralité de nervures formant des chicanes pour la circulation du fluide et un orifice d'entrée et un orifice de sortie pour ledit fluide, caractérisé en ce que la direction de chacune desdites nervures forme un angle compris entre 60° et 90° par rapport au plan de ladite cloison.

Toutes les nervures ne forment pas le même angle avec le plan des cloisons. Selon une variante, ledit angle varie avec la distance entre lesdites nervures et ledit orifice d'entrée ou ledit orifice de sortie dudit fluide. Par exemple l'angle peut être plus grand près de l'entrée de fluide et diminuer lorsqu'on s'éloigne de l'orifice d'entrée, puis réaugmenter pour retrouver sa valeur initiale à proximité de l'orifice de sortie.

Les orifices situés à la partie supérieure du compartiment communiquent avec des tubulures destinées au raccordement des monoblocs. Lorsque l'axe des orifices est vertical, la direction de chacune desdites nervures forme en outre un angle compris entre 60° et 90° par rapport aux axes desdits orifices. L'inclinaison des nervures, ou d'une portion des nervures, placées à proximité des orifices d'entrée et de sortie du fluide est déterminée par la distribution et la collection du fluide. Dans le cas où un liquide circule, des passages sont ménagés à travers les nervures pour l'évacuation des bulles de gaz.

Cette disposition renforce la résistance mécanique de la paroi située entre les nervures et les cloisons.

Selon un premier mode de réalisation, lesdites nervures sont formées sur ladite paroi et ne sont pas fixées ultérieurement.

Selon un deuxième mode de réalisation, lesdites nervures sont formées symétriquement à la fois sur ladite paroi et sur ledit flasque, puis les formes correspondantes sont fixées l'une à l'autre simultanément à la fixation dudit flasque sur ladite paroi.

La fixation dudit flasque sur ladite paroi ou bien des deux parties formant lesdites nervures est de préférence réalisée par soudure, notamment par soudure par miroir chauffant avec ou sans contact, encore appelée thermosoudure, ou soudure par vibrations si les matériaux s'y prêtent. Dans certains cas, cet assemblage peut également être obtenu par collage.

Selon un perfectionnement, ledit flasque porte une patte permettant la manutention de la batterie. De préférence la patte ne dépasse pas du volume enveloppe de la batterie. Cette patte peut par exemple être constituée d'une poignée plane parallèle au plan du flasque, munie d'un moyen facilitant la préhension comme un oeillet ou un relief.

De préférence, ladite batterie comprend un moyen de maintien pour des plaques disposées à chaque extrémités de la batterie, lesdites plaques d'extrémité portant des logements aptes à servir de guide audit moyen. Ce moyen peut être des tirants qui sont soudés, rivetés ou vissés sur les plaques d'extrémité, ou bien encore une ceinture entourant la batterie. La forme géométrique de la section du logement dépend de la forme du moyen de maintien choisi. La présence du moyen de maintien contribue à augmenter la solidité mécanique du conteneur. Selon une variante, lesdits flasques porte aussi des logements de guidage dudit moyen.

L'invention sera mieux comprise et d'autres avantages et particularités apparaîtront à la lecture de la description qui va suivre, donnée à titre non limitatif, accompagnée des dessins annexés parmi lesquels:
- la figure 1 montre schématiquement en perspective la disposition des nervures formant des chicanes à l'intérieur d'un compartiment de circulation de fluide appartenant à une batterie monobloc selon l'invention,
- la figure 2 représente une variante d'un circuit de circulation du fluide de refroidissement appartenant à une batterie monobloc selon l'invention,
- la figure 3 représente une autre variante d'un circuit de circulation du fluide de refroidissement appartenant à une batterie monobloc selon l'invention,
- la figure 4 représente une vue partielle en perspective d'une forme d'exécution d'une batterie monobloc selon l'invention.
- la figure 5 montre la contrainte P (en MPa) qui est générée par la pression du gaz sur la surface interne de la paroi du bac formant le compartiment de circulation, en fonction de la distance D (en mm) séparant deux cloisons consécutives,

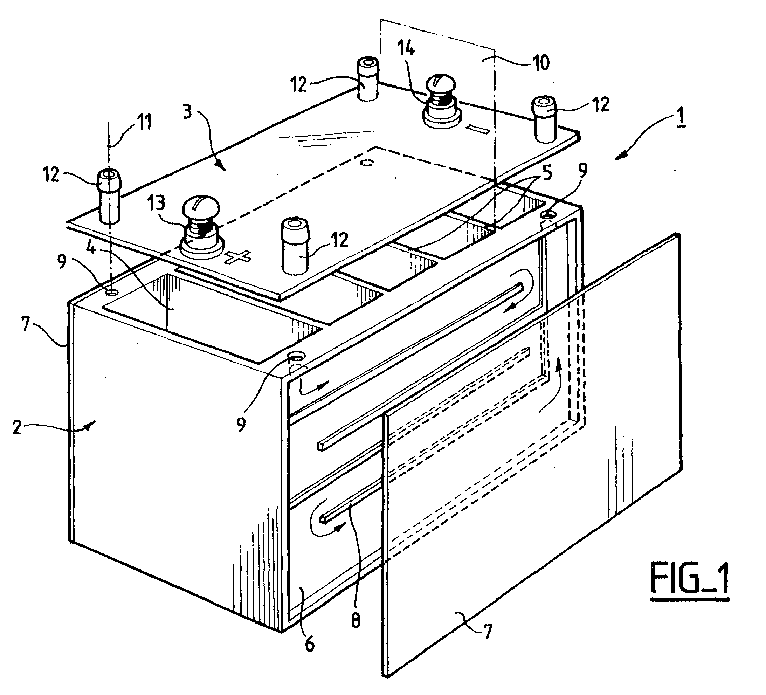

Une batterie monobloc étanche 1 selon l'invention est représentée sur la figure 1. Il peut s'agir notamment d'une batterie d'accumulateurs au plomb, nickel-cadmium, nickel-métal hydrurable, nickel-zinc, lithium-carbone. Son boîtier en matière plastique est constitué d'un bac 2 et d'un couvercle 3 thermosoudé sur le bac 2. Le bac 2 est divisé en alvéoles 4 par des cloisons 5 verticales disposées perpendiculairement aux parois longitudinales 6.

Deux flasques 7 en matière plastique sont thermosoudées de manière étanche sur les parois longitudinales 6, définissant avec les parois correspondantes des compartiments pour la circulation du fluide. Le fluide est par exemple un mélange d'eau et d'un glycol (comme l'éthylène glycol) à raison de 20 % à 50 % en masse. Le débit est de l'ordre de 20 à 80 litres à l'heure par compartiment pour un refroidissement efficace.

Les parois longitudinales 6 de la batterie comportent une série de cinq nervures 8 horizontales qui définissent des chicanes pour la circulation du fluide, comme indiqué par les flèches. Des orifices 9 d'entrée et de sortie pour le fluide sont prévus à la partie supérieure des compartiments. Dans ce cas, la direction des nervures fait un angle de 90°C par rapport au plan 10 des cloisons et à l'axe 11 des orifices 9. Les orifices 9 communiquent avec des tubulures 12 placées sur le couvercle. Le couvercle porte en outre les bornes positive 13 et négative 14.

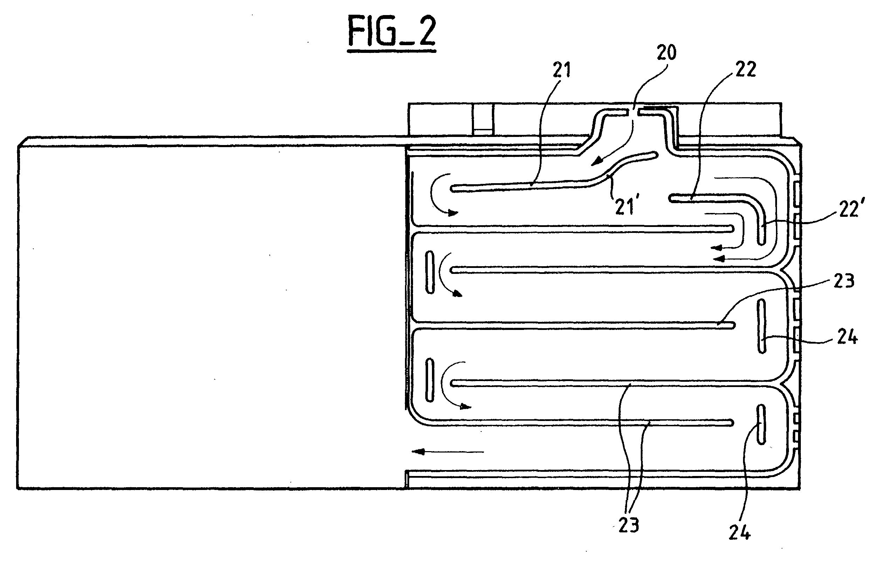

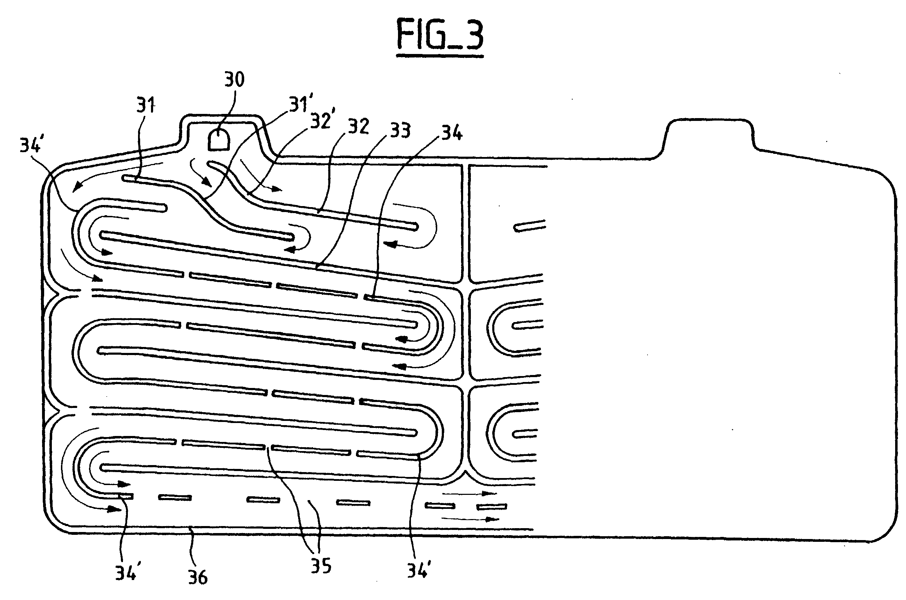

On a représenté sur les figures 2 et 3, deux exemples de circuit de refroidissement conformes à la présente invention. Les circuits étant composés de deux parties identiques placées symétriquement, seule l'une d'elle a été représentée. Ces dispositions permettent d'obtenir une répartition homogène des contraintes.

Sur la figure 2, un orifice 20 pour l'entrée du fluide est ménagé à la partie supérieure du compartiment. Les nervures 21, 22, 23 sont disposées horizontalement, à l'exception de la portion 21' de la nervure 21 placée à proximité de l'entrée du fluide dont l'inclinaison est de 45° afin d'accueillir et de répartir le fluide entrant. Des moyens 22', 24 de guidage et de division du flux sont disposés perpendiculairement à l'extrémité des nervures 22, 23. Le fluide pénètre dans le circuit par l'orifice 20 d'axe verticale parallèle au plan des cloisons des alvéoles, puis le fluide se distribue dans le circuit comme indiqué par les flèches. Dans la partie inférieure du compartiment, le fluide continue son trajet dans la partie symétrique non représentée pour s'évacuer par un orifice disposé de manière analogue à l'orifice 20

La figure 3 montre un orifice 30 d'axe horizontal pour l'entrée du fluide est ménagé à la partie supérieure du compartiment. Les nervures 31, 32, 33, 34 sont disposées selon un angle supérieur à 60° par rapport au plan des cloisons, à l'exception des portions 31' et 32' des nervures 31 et 32 placées à proximité de l'entrée du fluide dont l'inclinaison est de 45° afin d'accueillir et de répartir le fluide entrant. L'angle que fait la direction des nervures 31, 32, 33, 34 avec le plan des cloisons a une valeur proche de 60° pour les nervures placées près de l'orifice d'entrée 30. La valeur de cet angle augmente vers le bas de la paroi pour atteindre une valeur proche de 90° (nervure quasi-horizontale) à la base de la partie gauche du dispositif permettant la communication avec la partie droite non représentée du dispositif.

Les nervures 34 sont en outre reliée par des portions courbes 34' pour le guidage, la division du flux et la rigidification du dispositif de refroidissement. Les nervures 32 et 33 sont réalisées par injection à la fois sur la paroi du bac et sur le flasque. Lorsque la paroi et le flasque sont disposés face à face pour être thermosoudés, les deux parties correspondantes de la nervure s'appliquent l'une sur l'autre. Les nervures 31 et 34 sont réalisées seulement sur la paroi du bac et ne sont pas soudées dans ce cas ; elles peuvent éventuellement être supprimées.

Des passages 35 sont ménagés à travers les nervures 34 pour l'évacuation des bulles de gaz. Le fluide pénètre dans le circuit par l'orifice 30, puis le fluide se distribue dans le circuit comme indiqué par les flèches. Dans la partie inférieure du compartiment, le fluide continue son trajet dans la partie symétrique non représentée pour s'évacuer par un orifice de sortie disposé de manière analogue à l'orifice 30.

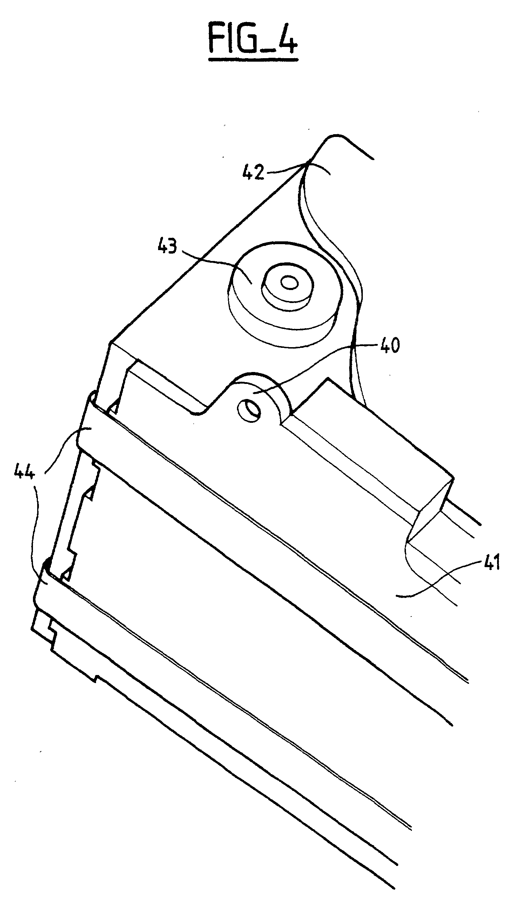

Des pattes de manutention 40 visibles sur la figure 4 peuvent être prévues sur la face externe du flasque 41 de telle sorte que leur sommet ne dépasse pas le plan de la face supérieure du capot 42 protégeant les bornes de sortie de courant 43. On peut également prévoir dans la face externe du flasque 41 des logements pour recevoir un moyen de maintien comme par exemple au moins une ceinture 44 métallique entourant la batterie. Sur le couvercle on peut disposer un boîtier 45 de liaison avec une durite pour l'entrée et la sortie du liquide de refroidissement.

### EXEMPLE 1

On réalise une batterie monobloc de l'art antérieur, analogue à celle décrite dans la demande de brevet européen EP-0 596 778, munie d'un dispositif de refroidissement dont les nervures font un angle inférieur à 60° avec le plan des cloisons séparant les alvéoles. Le bac possède des parois en polyoléfine formant le dispositif de refroidissement qui ont une épaisseur de 2mm. Les flasques ont une épaisseur de 2,5mm et définissent des compartiments de circulation d'épaisseur 3mm, soit une épaisseur totale du dispositif de refroidissement de 7,5mm. La distance entre deux cloisons successives est de 34mm. Ainsi la batterie comprend des éléments comportant 15 couples électrochimiques, soit une capacité d'environ 100Ah.

On impose une pression interne de fonctionnement de cette batterie de 2,8 bars relatifs, la contrainte maximale générée sur les parois que l'on peut mesurer est de 10,4MPa, ce qui entraîne une déformation de 2,78mm. Une telle contrainte entraîne des risques comme la rupture du bac par fluage du matériau ou un mauvais contact thermique entre le faisceau et la paroi du bac.

### EXEMPLE 2

On réalise une batterie selon l'invention analogue à celle de l'exemple 1 à l'exception du fait qu'elle est munie d'un dispositif de refroidissement dont les nervures font un angle supérieur à 60° avec le plan des cloisons séparant les alvéoles. Les parois du bac formant le dispositif de refroidissement ont une épaisseur de 2mm et l'épaisseur totale du dispositif de refroidissement de 7,5mm. La distance entre deux cloisons successives est de 34mm. Ainsi la batterie comprend des éléments comportant 15 couples électrochimiques soit une capacité d'environ 100Ah.

On impose une pression interne de fonctionnement de cette batterie de 2,8 bars relatifs. La contrainte maximale générée sur les parois que l'on peut mesurer est de 4,9mpa. Le dispositif de refroidissement conforme à la présente invention permet d'abaisser de 53% la contrainte générée par une pression interne de 2,8 bars sur la paroi constitué du même matériau.

### EXEMPLE 3

Pour des raisons de fiabilité et de sécurité, les utilisateurs de ces batterie ne peuvent accepter de contrainte supérieure à 6MPa. Dans ce but on réalise une batterie monobloc analogue à celle de l'exemple 2, à l'exception du fait que l'épaisseur totale du dispositif de refroidissement de 7mm.

On impose une pression interne de fonctionnement de cette batterie de 2,8 bars relatifs, la contrainte maximale générée sur les parois que l'on peut mesurer est de 5,6MPa, ce qui entraîne une déformation de 2,12mm. Par rapport à l'art antérieur la contrainte est abaissé de 46%, et la déformation résultante est réduite de 24%.

Tout en respectant le seuil de risque admissible fixé par l'utilisateur, le volume totale de la batterie a pu être diminué grâce à l'invention.

Les caractéristiques et les résultats des exemples ci-dessus sont rassemblés dans le tableau ci-après.

**TABLEAU**

| | Exemple n°1 | Exemple n°2 | Exemple n°3 |
|---|---|---|---|
| Largeur D des alvéoles : | 34mm | 34mm | 34mm |
| Epaisseur de la paroi formant le compartiment : | 2mm | 2mm | 2mm |
| Epaisseur totale du dispositif de refroidissement : | 7,5mm | 7,5mm | 7mm |
| Pression interne : | 2,8 bars | 2,8 bars | 2,8 bars |
| Contrainte P générée sur la paroi : | 10,4MPa | 4,9MPa | 5,6MPa |

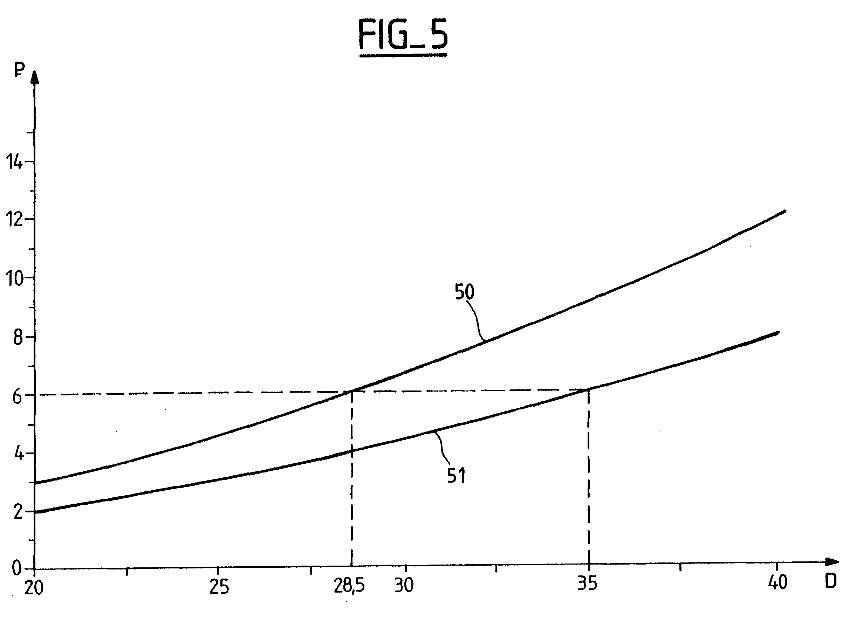

Pour une contrainte maximale de 6MPa, la courbe 50 de la figure 5 montre que la largeur des alvéoles ne peut dépasser 28,5mm pour un dispositif de refroidissement selon l'art antérieur dont les nervures font un angle inférieur à 60° avec le plan des cloisons, soit des éléments de 12 couples. Alors que dans les mêmes conditions, la largeur des alvéoles peut atteindre 35mm (15 couples) pour une batterie selon la présente invention (courbe 51).

Bien entendu, les diverses applications numériques fournies ne le sont qu'à titre d'exemple non limitatif.

## Revendications

1. Batterie monobloc étanche, fonctionnant à une pression au moins égale à 1 bar relatif, comprenant un conteneur en matière plastique constitué d'un couvercle et d'un bac divisé en alvéoles par au moins une cloison, ladite batterie étant munie d'un dispositif de refroidissement comportant deux flasques en matière plastique coopérant respectivement avec la face externe de deux parois opposées dudit bac perpendiculaires à ladite cloison, ledit flasque définissant avec ladite paroi un compartiment comportant une pluralité de nervures formant des chicanes pour la circulation du fluide et un orifice d'entrée et un orifice de sortie pour ledit fluide, **caractérisé en ce que** la direction de chacune desdites nervures forme un angle compris entre 60° et 90° par rapport au plan de ladite cloison.

2. Batterie selon la revendication 1, dans laquelle ledit angle varie avec la distance entre lesdites nervures et ledit orifice d'entrée ou ledit orifice de sortie dudit fluide.

3. Batterie selon l'une des revendications 1 et 2, dans laquelle lesdites nervures sont formées sur ladite paroi.

4. Batterie selon l'une des revendications 1 et 2, dans laquelle lesdites nervures sont formées symétriquement à la fois sur ladite paroi et sur ledit flasque, puis les formes correspondantes sont fixées l'une à l'autre simultanément à la fixation dudit flasque sur ladite paroi.

5. Batterie selon l'une des revendications précédentes, dans laquelle ladite fixation est réalisée par une soudure choisie parmi une soudure par miroir chauffant et une soudure par ultrasons.

6. Batterie selon l'une des revendications précédentes, dans laquelle ledit flasque porte une patte de manutention.

7. Batterie selon l'une des revendications précédentes, dans laquelle ladite batterie comprend un moyen de maintien pour des plaques disposées à chaque extrémités de la batterie, lesdites plaques d'extrémité portant des logements pour le guidage dudit moyen.

8. Batterie selon la revendication 7, dans laquelle lesdits flasques portent des logements pour le guidage dudit moyen.

## Claims

1. A sealed battery block operating at a pressure of at least 1 bar relative, the battery block including a container made of a plastics material and made up of a lid and of a case subdivided into wells by at least one partition, said battery being provided with a cooling system including two cheek plates made of a plastics material and co-operating with the outside faces of respective ones of two opposite walls of said case that are perpendicular to said partition, each cheek plate co-operating with the corresponding wall to define a compartment provided with a plurality of ribs forming baffles for fluid flow purposes, and with an inlet orifice and an outlet orifice for said fluid, said battery being **characterized in that** each of said ribs extends in a direction that forms an angle relative to the plane of said partition lying in the range 60° to 90°.

2. A battery according to claim 1, in which said angle varies with the distance between said ribs and said inlet orifice or said outlet orifice for said fluid.

3. A battery according to claim 1 or 2, in which said ribs are formed on said wall.

4. A battery according to claim 1 or 2, in which said ribs are formed symmetrically both on said wall and on said cheek plate, and then the corresponding shapes are fixed together at the same time as said cheek plate is fixed to said wall.

5. A battery according to any preceding claim, in which the fixing is performed by welding chosen from heat-mirror welding and ultrasound welding.

6. A battery according to any preceding claim, in which said cheek plate carries a handling tab.

7. A battery according to any preceding claim, in which said battery is provided with holding means for holding plates disposed at either end of the battery, which end plates carry recesses for guiding said means.

8. A battery according to claim 7, in which said cheek plates carry recesses for guiding said means.

## Patentansprüche

1. Verschlossene Monoblock-Batterie, die mit einem Druck von mindestens gleich 1 Bar relativ betrieben wird, aufweisend einen Kunststoffbehälter, der aus einem Deckel und einem Kasten besteht, durch mindestens eine Zwischenwand in Kammern unterteilt, wobei die Batterie mit einer Kühlungsvorrichtung ausgerüstet ist, die zwei Wandscheiben aus Kunststoff aufweist, welche jeweils mit der Außenseite von zwei gegenüberliegenden Wänden des Kastens zusammenwirken, die zu der genannten Zwischenwand senkrecht stehen, wobei die Wandscheibe mit der Wand einen Raum definiert, der eine Vielzahl von Rippen aufweist, die Hindernisse für die Zirkulation des Fluids darstellen, sowie eine Eintrittsöffnung und eine Austrittsöffnung für das Fluid, **dadurch gekennzeichnet, dass** die Richtung jeder dieser Rippen gegenüber der Ebene der Zwischenwand einen Winkel von 60° bis 90° bildet.

2. Batterie nach Anspruch 1, bei der der Winkel sich mit dem Abstand zwischen den Rippen und der Eintrittsöffnung oder der Austrittsöffnung des Fluids ändert.

3. Batterie nach einem der Ansprüche 1 und 2, bei der die Rippen auf der Wand geformt werden.

4. Batterie nach einem der Ansprüche 1 und 2, bei der die Rippen symmetrisch gleichzeitig auf der Wand und auf der Wandscheibe geformt werden, und wobei die entsprechenden Formen danach gleichzeitig mit der Befestigung der Wandscheibe an der Wand aneinander befestigt werden.

5. Batterie nach einem der vorhergehenden Ansprüche, bei der die Befestigung durch eine Schweißung ausgeführt wird, wobei zwischen einer Schweißung mit Heizspiegel und einer Ultraschallschweißung gewählt werden kann.

6. Batterie nach einem der vorhergehenden Ansprüche, bei der die Wandscheibe einen Transportansatz trägt.

7. Batterie nach einem der vorhergehenden Ansprüche, bei der die Batterie eine Haltevorrichtung für Platten aufweist, die an jedem Ende der Batterie angeordnet sind, wobei diese Endplatten Aufnahmen zur Führung dieser Vorrichtung tragen.

8. Batterie nach Anspruch 7, bei der die Wandscheiben Aufnahmen zur Führung dieser Vorrichtung tragen.
